# EUROPÄISCHE PATENTSCHRIFT

(11) **EP 1 801 473 B1**
(45) Veröffentlichungstag und Bekanntmachung des Hinweises auf die Patenterteilung: **13.09.2017**
(21) Anmeldenummer: 06024766.5
(22) Anmeldetag: 30.11.2006
(51) Int. Cl.: F16K 11/044

(54) **Hydraulikventil**
Hydraulic valve
Soupape hydraulique

(30) Priorität: 23.12.2005 DE 102005062350
(43) Veröffentlichungstag der Anmeldung: 27.06.2007
(73) Patentinhaber: ABB Schweiz AG, 5400 Baden (CH)
(72) Erfinder: Lohrberg, Henrik Dr.-Ing., 60431 Frankfurt (DE); Wolfe, Dan J., Trafford, PA 15666 (US)
(74) Vertreter: ABB Patent Attorneys

(56) Entgegenhaltungen:
- DE-A1- 10 005 290
- US-A- 4 283 996
- US-A- 5 081 905

## Beschreibung

Die Erfindung betrifft ein Hydraulikventil mit einem Ventilkörper in einem Ventilgehäuse, dass eine erste, eine zweite und eine dritte Ausnehmung aufweist. Über die erste Ausnehmung ist ein Hydraulikmedium zuleitbar. Zudem ist über die zweite Ausnehmung das Hydraulikmedium zu einem Druckverbraucher und über die dritte Ausnehmung das Hydraulikmedium zu einer Drucksenke zuleitbar. Der Ventilkörper ist zwischen zwei Endlagen hin- und herbeweglich, wobei in der ersten Endlage das Hydraulikmedium von der zweiten zur dritten Ausnehmung gelangt und wobei in der zweiten Endlage das Hydraulikmedium von der ersten zur zweiten Ausnehmung gelangt.

Derartige Hydraulikventile sind allgemein bekannt und werden auch Umschaltventile genannt.

In der US 5081905 A ist ein hydraulisches Schnellablassventil für Öl sowie ein hydraulischer Fernsteuerungskreis mit einem solchen Schnellablassventil beschrieben, welche zur Verwendung in großen Baumaschinen vorgesehen ist.

Aus der US 4283996 A ist eine Nivelliereinrichtung für einen Mähdrescher bekannt geworden, welche unter anderem eine Ventileinrichtung mit mehreren Ventilkolben aufweist und dazu dient, die Höhe und die Neigung des Mähbalkens einzustellen. Die Ventileinrichtung verfügt über ein Hydraulikventil der eingangs genannten Art.

Bei Umschaltventilen erfolgt die Umschaltung durch das Hin- und Herbewegen des Ventilkörpers, das vergleichsweise schnell erfolgt. Hierdurch kann es zu unerwünschten Druckstößen im hydraulischen System kommen, wenn die Strömungsquerschnitte für das Hydraulikmedium durch den Ventilkörper vergleichsweise schnell freigegeben werden. Je nach Aufbau des hydraulischen Systems, können solche Druckstöße Schwingungen im Gesamtsystem verursachen die ebenfalls unerwünscht sind.

So hat sich beispielsweise herausgestellt, dass bei der Verwendung von Zweistufenumschaltventilen bei hydromechanischen Federspeicherantrieben für Hochspannungsschaltanlagen die Druckstöße im hydraulischen System so groß sein können, dass davon der Antrieb und/oder der Schalter beeinflusst sind.

Ausgehend von diesem Stand der Technik, ist es die Aufgabe der Erfindung ein Hydraulikventil anzugeben, mit dem die Druckstöße im hydraulischen System aufgrund von Schalthandlungen verringert sind.

Diese Aufgabe wird gelöst durch ein Hydraulikventil mit einem Ventilkörper in einem Ventilgehäuse mit den im Patentanspruch 1 angegebenen Merkmalen.

Demgemäß kennzeichnet sich ein erfindungsgemäßes Hydraulikventil dadurch, dass durch den Ventilkörper während einer Schalthandlung von der ersten in die zweite Endlage während einer festgelegten Zeitspannen ein konstanter Strömungsquerschnitt für das Hydraulikmedium durch die erste Ausnehmung freigegeben ist, und dass der Strömungsquerschnitt vom Maximalströmungsquerschnitt beim Ventilkörper in der zweite Endlage verschieden ist.

Erfindungsgemäß ist es also vorgesehen, dass das Ventil den Strömungsquerschnitt bei seiner Schalthandlung von der ersten in die zweite Endlage nicht kontinuierlich freigibt, sondern zunächst den Strömungsquerschnitt teilweise freigibt, dann eine festgelegte Zeitspanne lang den freigegebenen Strömungsquerschnitt beibehält und erst im Anschluss an die festgelegte Zeitspanne den Strömungsquerschnitt weiter vergrößert, bis der Maximalströmungsquerschnitt erreicht ist. Auf diese Weise ist verhindert, dass ein Druckstoß durch die plötzliche Freigabe des gesamten Strömungsquerschnitts, also dem des Maximalströmungsquerschnitts entsprechend hohe Druckstöße verursacht.

Dies kann in vorteilhafterweise erreicht werden, indem der Ventilkörper die festgelegte Zeitspanne in einer Zwischenstellung zwischen den beiden Endlagen festgehalten ist.

Hierfür ist insbesondere der Antrieb des Hydraulikventils entsprechend anzusteuern und insgesamt die Mechanik des Ventilkörpers entsprechend angepasst.

In einer vorteilhaften Ausgestaltung des erfindungsgemäßen Hydraulikventils werden die vorgenannten Vorteile auch erreicht, indem der Ventilkörper auf seine zur ersten Ausnehmung weisenden Seite mit dessen äußeren Gestalt auf die Gestalt der ersten Ausnehmung angepasst ist, und indem bei der bei einer kontinuierlichen Bewegung des Ventilkörpers von der ersten in die zweite Endlage über die festgelegte Zeitspanne der Strömungsquerschnitt konstant ist.

In dieser Ausgestaltung ist vorteilhafterweise erreicht, dass der Antrieb des hydraulischen Umschaltventils, der üblicherweise den Ventilkörper kontinuierlich von der ersten in die zweite Endlage verbringt, die seither verwendet werden kann. Der konstante Strömungsquerschnitt über die festgelegte Zeitspanne wird nämlich erfindungsgemäß durch entsprechende Ausgestaltung des Ventilkörpers erreicht, also in einer entsprechenden mechanischen Ausgestaltung.

Die erfindungsgemäßen Vorteile sind auch erreichbar, wenn im Strömungspfad des Hydraulikmediums im Bereich der ersten Ausnehmung eine regelbare Blende angeordnet ist.

Dabei kann die regelbare Blende sowohl unmittelbar im Bereich des Hohlraumes der ersten Ausnehmung angeordnet sein, als auch stromaufwärts des Strömungspfades des Hydraulikmediums, des Hydraulikventils.

Weitere vorteilhafte Ausgestaltung des erfindungsgemäßen Hydraulikventils sind den weiteren abhängigen Ansprüchen zu entnehmen.

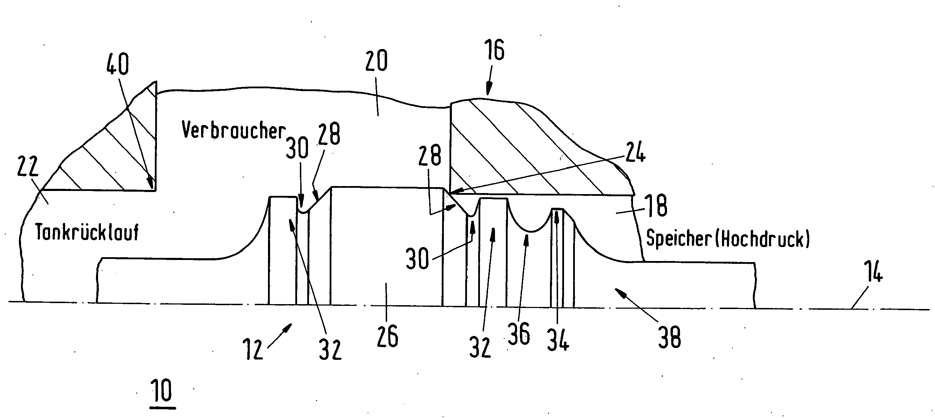

Anhand des in der Zeichnung dargestellten Ausführungsbeispiels soll die Erfindung, vorteilhafte Ausgestaltung und Verbesserungen der Erfindung sowie deren besonderen Vorteile näher erläutert und beschrieben werden.

Es zeigt:
- einzige Figur: Ein Schnittbild durch ein hydraulisches Umschaltventil als Skizze.

Die einzige Figur zeigt ein Schnittbild durch ein Umschaltventil 10, bei dem ein Ventilkörper 12 gezeigt ist, dessen in dieser Darstellung untere Hälfte nicht dargestellt ist, was durch eine Symmetrielinie 14 des Ventilkörpers 12 dargestellt ist. Dabei ist der Ventilkörper 12 in Richtung der Symmetrieachse 14 in einem Ventilgehäuse 16 hin und her beweglich.

Das Ventilgehäuse 16 weist eine erste Ausnehmung 18 auf, die im dargestellten Beispiel als zylindrische Bohrung ausgestaltet ist und in der Figur in der gezeigten Ansicht rechts angeordnet ist. Dabei ist die erste Ausnehmung 18 mit einem Druckspeicher verbunden, hier ein Hochdruckspeicher, der ein Hydrauliköl bei einem bestimmten Druck zu Verfügung stellt. Dieses Hydrauliköl wird durch eine nicht dargestellte Hochdruckleitung dem Umschaltventil 12 über die erste Ausnehmung 18 zugeleitet.

Dabei ist der Ventilkörper 12 in einer Position dargestellt, bei der die erste Ausnehmung 18 vollständig verschlossen ist, und die als erste Endlage bezeichnet werden soll. Die Abdichtung zwischen dem Ventilkörper 12 und den Ventilgehäuse 16 erfolgt dabei an einem Dichtsitz 24, der zur Abdichtung der Hochdruckseite des Umschaltventils 10 an der Stelle des Übergangs von der ersten Ausnehmung 18 zu einer zweiten Ausnehmung 20 angeordnet ist. Die zweite Ausnehmung 20 ist dabei diejenige Ausnehmung am Umschaltventil 10, an der ein Druckverbraucher, beispielsweise ein Regelventil, anschließbar ist.

Üblicherweise ist ein derartiger Dichtsitz im Bereich der ersten Ausnehmung konisch, beispielsweise als Anphasung der betreffenden Kante am Ventilgehäuse 16, ausgeführt, was in dieser Figur jedoch nicht im Detail dargestellt ist. Die Abdichtung an dieser Stelle erfolgt gegen den Ventilkörper 12, der seinem zentralen Bereich als zylindrischer Mittelteil 26 ausgestaltet ist, mit einen Durchmesser, der größer ist als der Durchmesser der ersten Ausnehmung 18. Auf diese Weise ist sicher gestellt, dass der Dichtsitz 24 als Anschlagkante für den mittleren Teil 26 dient. Hierfür ist dieser in seinen axialen Randbereichen jeweils mit einer Phase 28 versehen, die in einer Hinterschneidung 30 eines Überdeckungsabschnittes 32 endet.

Die Überdeckungsbereiche 32 weisen dabei einen Durchmesser auf, der nur vergleichsweise wenig kleiner ist, als der Durchmesser der ersten Ausnehmung 18 beziehungsweise einer dritten Ausnehmung 22 auf der der ersten Ausnehmung 18 gegenüberliegenden Seite des Ventilgehäuses 16. Dabei ist die dritte Ausnehmung 22 im vorliegenden Beispiel mit einer Tankrücklaufleitung, also einer Drucksenke, verbunden, die zu einem Hydraulikölbehälter führt, aus dem eine Pumpe den Hochdruckspeicher bedarfsweise fühlt. Die Überdeckungen 32 sind insbesondere zur Führung des Ventilkörpers 12 in den Bereichen der ersten Ausnehmung 18 sowie der dritten 22 vorgesehen. Der verbleibende Spalt zwischen den Ausnehmungen 18, 22 und den Überdeckungen 32 sind so gering, dass sie bereits als Dichtspalt bezeichnet werden können und lassen damit keine für die Funktion des Ventils wesentlichen Mengen Öl durch diesen Spalt hindurch.

Auf der zur ersten Ausnehmung 18 weisenden Seite des Ventilkörpers 12 ist in Richtung der ersten Ausnehmung 18 noch eine Einlaufkante 34 angeordnet, die einerseits mit einer weiteren Hinterschneidung 36 mit der entsprechenden Überdeckung 32 verbunden ist, andererseits als Ventilstößel 36 ausgestaltet ist, der mit dem nicht dargestellten Antrieb des Ventilkörpers 12 verbunden ist. Die Einlaufkante 34 gibt es lediglich auf dieser Seite des Ventilkörpers 12.

Um die Wirkungsweise näher erläutern zu können, werden nachfolgend die Vorgänge am Umschaltventil 10 geschildert, die bei einer Schalthandlung von der ersten Endlage, wie sie in der Figur dargestellt ist, in eine zweite Endlage, bei sich der Ventilkörper 12 an einem zweiten Dichtsitz 40 befindet. Durch den Ventilantrieb, der eine Kraftwirkung auf den Ventilstößel 38 ausübt, wird sich der Ventilkörper 12 ausgehend von seiner ersten Endlage entlang der Symmetrieachse 14 sich in dieser Figur von rechts nach links zu bewegen beginnen. In einer ersten Phase verlässt der Ventilkörper seinen Dichtsitz 24, sodass eine vollständige Abdichtung des Hochdruckmediums, das unter Druck in ersten Ausnehmung 18 ansteht, nicht mehr gewährleistet ist. Da der freie Strömungsquerschnitt zwischen der entsprechenden Überdeckung 32 und dem Hohldurchmesser der ersten Ausnehmung 18 jedoch nur eine geringe Fläche aufweist ist der Strom an Hydrauliköl, der zur zweiten Ausnehmung 20 oder zur dritten Ausnehmung 22 gelangt vergleichsweise gering, sodass beim Druckaufbau im Bereich der zweiten Ausnehmung 20 erfolgt. Sobald die betreffende Überdeckung 32 den Bereich der ersten Ausnehmung 18 verlässt, wird ein wesentlich größerer Strömungsquerschnitt für das Hydrauliköl frei, der sich durch den Ringspalt zwischen den Durchmessern der Einlaufkante 34 und dem Hohlzylinderdurchmesser der ersten Ausnehmung 18 bestimmt. Dieser freie Strömungsquerschnitt kann erfindungsgemäß durch die Konstruktion des Ventilkörpers 12 festgelegt werden. Aus dem Abstand der betreffenden Überdeckung 32 und der Einlaufkante 34 bestimmt sich zudem erfindungsgemäß die Zeitspanne, in der dieser teilweise freigegebene Strömungsringspaltwirkung entfaltet. In Verbindung mit der bekannten Bewegungsgeschwindigkeit des Ventilkörpers 12 entlang der Symmetrieachse 14 kann auf einfache Weise bestimmt werden, wie lange die Zeitspanne ist. Sobald die Einlaufkante 34 den axialen Bereich der ersten Ausnehmung 18 verlässt, ist der gemäß vorgegebener Konstruktion maximale Strömungsquerschnitt zum Einlauf des Hochdrucköls erreicht. Dabei wird der Ventilkörper 12 solange bewegt, bis er den zweiten Dichtsitz 40 erreicht hat, und somit das einströmende Hochdrucköl gegen den Tankrücklauf abdichtet, sodass das Hydrauliköl vollständig zum Verbraucher, der an der zweite Ausnehmung 20 angeschlossen ist gelangt.

Im vorliegenden Beispiel ist also gezeigt, dass erfindungsgemäß das Hydrauliköl sozusagen in zwei Druckstufen dem Verbraucher zugeführt wird, sodass die durch die Öffnung der Hochdruckleitung zunächst nicht die gesamte Druckspitze erfährt, wie bei einer vollständigen Öffnung eines Umschaltventils wie es im Stand der Technik bekannt ist.

Es ist auch innerhalb des Erfindungsgedankens, wenn mehr als eine Einlaufkante vorhanden ist, die in zweckmäßiger Weise von Stufe zu Stufe jeweils einen geringeren Durchmesser aufweisen.

### Bezugszeichenliste

- 10: Umschaltventil
- 12: Ventilkörper
- 14: Symmetrielinie
- 16: Ventilgehäuse
- 18: erste Ausnehmung
- 20: zweite Ausnehmung
- 22: dritte Ausnehmung
- 24: Dichtsitz
- 26: Mittelteil
- 28: Phase
- 30: Hinterschneidung
- 32: Überdeckungsabschnil
- 34: Einlaufkante
- 36: Überschneidung
- 38: Ventilstößel
- 40: Dichtsitz

## Patentansprüche

1. Hydraulikventil mit einem Ventilkörper (12) in einem Ventilgehäuse (16), das eine erste, eine zweite und eine dritte Ausnehmung (18, 20, 22) aufweist, wobei über die erste Ausnehmung (18) ein Hydraulikmedium zuleitbar ist, wobei über die zweite Ausnehmung (20) das Hydraulikmedium zu einem Druckverbraucher zuleitbar ist, wobei über die dritte Ausnehmung (22) das Hydraulikmedium zu einer Drucksenke zuleitbar ist, wobei der Ventilkörper (12) zwischen zwei Endlagen hin- und herbeweglich ist, wobei in der ersten Endlage das Hydraulikmedium von der zweiten (20) zur dritten (22) Ausnehmung gelangt, und wobei in der zweiten Endlage das Hydraulikmedium von der ersten (18) zur zweiten (20) Ausnehmung gelangt, **dadurch gekennzeichnet, dass** das Ventil durch den Ventilkörper während einer Schalthandlung von der ersten in die zweite Endlage zunächst einen konstanten Strömungsquerschnitt für das Hydraulikmedium durch die erste Ausnehmung (18) freigibt, dann eine festgelegte Zeitspanne lang den freigegebenen Strömungsquerschnitt beibehält und im Anschluss an die festgelegte Zeitspanne den Strömungsquerschnitt weiter vergrößert, bis ein Maximalströmungsquerschnitt in der zweiten Endlage erreicht ist, wobei
• eine Abdichtung zwischen dem Ventilkörper (12) und dem Ventilgehäuse (16) an einem Dichtsitz (24) erfolgt, wobei der Dichtsitz (24) an einer Stelle des Übergangs von der ersten Ausnehmung (18) zur zweiten Ausnehmung (20) angeordnet ist und wobei der Dichtsitz (24) als Anschlagkante für einen mittleren Teil (26) des Ventilkörpers (12) dient,
• bei der Schalthandlung von der ersten in die zweite Endlage der Ventilkörper (12) in einer ersten Phase den Dichtsitz (24) verlässt, so dass eine vollständige Abdichtung des Hydraulikmediums, das unter Druck in der ersten Ausnehmung (18) ansteht, nicht mehr gewährleistet ist,
• die erste Ausnehmung (18) auf der zum Ventilkörper (12) weisenden Seite eine hohlzylindrische Gestalt aufweist,
• der Ventilkörper (12) auf seiner zur ersten Ausnehmung (18) weisenden Seite einen axialen Bereich aufweist, der eine Mantelfläche mit einer zylindrischen Gestalt hat, und dass bei der Schalthandlung von der ersten in die zweite Endlage zwischen der ersten Ausnehmung (18) und dem axialen Bereich ein Ringspalt entsteht, der den Strömungsquerschnitt für das Hydraulikmedium freigibt,
• der Maximalströmungsquerschnitt erreicht ist, sobald eine auf der zur ersten Ausnehmung (18) weisenden Seite des Ventilkörpers (12) in Richtung der ersten Ausnehmung (18) angeordnete Einlaufkante (34) den axialen Bereich der ersten Ausnehmung (18) verlässt.

2. Hydraulikventil nach Anspruch 1, **dadurch gekennzeichnet, dass** der Ringspalt gebildet ist zwischen dem Durchmesser der Einlaufkante (34) und dem Hohlzylinderdurchmesser der ersten Ausnehmung (18).

3. Hydraulikventil nach Anspruch 1 oder 2, **dadurch gekennzeichnet, dass** der mittlere Teil (26) des Ventilkörpers in seinen axialen Randbereichen jeweils mit einer Phase (28) versehen ist, die in einer Hinterschneidung (30) eines Überdeckungsabschnittes (32) endet, und dass sich die festgelegte Zeitspanne aus dem Abstand des Überdeckungsabschnittes (32) und der Einlaufkante (34) bestimmt.

4. Hydraulikventil nach einem der vorigen Ansprüche, **dadurch gekennzeichnet, dass** der Ventilkörper (12) auf seiner zur ersten Ausnehmung (18) weisenden Seite mit seiner äußeren Gestalt auf die Gestalt der ersten Ausnehmung angepasst ist, und dass bei einer Bewegung des Ventilkörpers (12) von der ersten in die zweite Endlage über die festgelegte Zeitspanne der Strömungsquerschnitt konstant ist.

5. Hydraulikventil nach Anspruch 4, **dadurch gekennzeichnet, dass** der Antrieb des Hydraulikventils den Ventilkörper (12) kontinuierlich von der ersten in die zweite Endlage verbringt.

6. Hydraulikventil nach einem der vorgenannten Ansprüche, **dadurch gekennzeichnet, dass** im Strömungspfad des Hydraulikmediums im Bereich der ersten Ausnehmung (18) eine regelbare Blende angeordnet ist.

## Claims

1. Hydraulic valve having a valve body (12) in a valve housing (16) which has a first, a second and a third recess (18, 20, 22), it being possible for a hydraulic medium to be fed in via the first recess (18), it being possible for the hydraulic medium to be fed to a pressure consumer via the second recess (20), it being possible for the hydraulic medium to be fed to a pressure sink via the third recess (22), it being possible for the valve body (12) to be moved to and fro between two end positions, the hydraulic medium passing from the second (20) to the third recess (22) in the first end position, and the hydraulic medium passing from the first (18) to the second recess (20) in the second end position, **characterized in that**, during a switching action from the first into the second end position, the valve first of all opens a constant flow cross section for the hydraulic medium through the first recess (18) by way of the valve body, then maintains the open flow cross section for a fixed time period, and, following the fixed time period, enlarges the flow cross section further until a maximum flow cross section is reached in the second end position,
• a sealing action taking place between the valve body (12) and the valve housing (16) at a sealing seat (24), the sealing seat (24) being arranged at a location of the transition from the first recess (18) to the second recess (20), and the sealing seat (24) serving as a stop edge for a middle part (26) of the valve body (12),
• the valve body (12) leaving the sealing seat (24) in a first phase during the switching action from the first into the second end position, with the result that a complete sealing action of the hydraulic medium which is pressurized in the first recess (18) is no longer ensured,
• the first recess (18) having a hollow-cylindrical design on the side which faces towards the valve body (12),
• the valve body (12) having an axial region on its side which points towards the first recess (18), which axial region has a circumferential face with a cylindrical design, and, during the switching action from the first into the second end position, an annular gap being produced between the first recess (18) and the axial region, which annular gap opens the flow cross section for the hydraulic medium,
• the maximum flow cross section being reached as soon as an inlet edge (34) which is arranged in the direction of the first recess (18) on that side of the valve body (12) which points towards the first recess (18) leaves the axial region of the first recess (18).

2. Hydraulic valve according to Claim 1, **characterized in that** the annular gap is formed between the diameter of the inlet edge (34) and the hollow-cylindrical diameter of the first recess (18).

3. Hydraulic valve according to Claim 1 or 2, **characterized in that** the middle part (26) of the valve body is provided in its axial edge regions in each case with a bevel (28) which ends in an undercut (30) of an overlap section (32), and **in that** the fixed time period is determined from the spacing of the overlap section (32) and the inlet edge (34).

4. Hydraulic valve according to one of the preceding claims, **characterized in that**, on its side which points towards the first recess (18), the valve body (12) is adapted with its outer design to the design of the first recess, and **in that** the flow cross section is constant over the fixed time period during a movement of the valve body (12) from the first into the second end position.

5. Hydraulic valve according to Claim 4, **characterized in that** the drive of the hydraulic valve moves the valve body (12) continuously from the first into the second end position.

6. Hydraulic valve according to one of the preceding claims, **characterized in that** a controllable orifice is arranged in the flow path of the hydraulic medium in the region of the first recess (18).

## Revendications

1. Soupape hydraulique comportant un corps de soupape (12) dans un boîtier de soupape (16) muni de premier, deuxième et troisième évidements (18, 20, 22), dans lequel un fluide hydraulique peut être introduit par l'intermédiaire du premier évidement (18), dans lequel le fluide hydraulique peut être acheminé vers un élément consommateur de pression par l'intermédiaire du deuxième évidement (20), dans lequel le fluide hydraulique peut être acheminé vers un puits de pression par l'intermédiaire du troisième évidement (22), dans lequel le corps de soupape (12) est mobile par va-et-vient entre deux positions d'extrémité, dans lequel, à la première position d'extrémité, le fluide hydraulique va du deuxième évidement (20) au troisième évidement (22), et dans lequel, à la deuxième position d'extrémité, le fluide hydraulique va du premier évidement (18) au deuxième évidement (20), **caractérisée en ce que** la soupape libère en premier lieu, à travers le corps de soupape, pendant une opération de basculement de la première à la deuxième position d'extrémité, une section transversale d'écoulement constante pour le fluide hydraulique à travers le premier évidement (18), puis maintient la section transversale d'écoulement libérée pendant un intervalle de temps fixe, puis, après l'intervalle de temps fixe, augmente de nouveau la section transversale d'écoulement jusqu'à ce qu'une section transversale d'écoulement maximale soit atteinte à la deuxième position d'extrémité, dans lequel
- une étanchéité est établie entre le corps de soupape (12) et le boîtier de soupape (16) au niveau d'un siège d'étanchéité (24), dans lequel le siège d'étanchéité (24) est disposé en un point de transition du premier évidement (18) au deuxième évidement (20) et dans lequel le siège d'étanchéité (24) joue le rôle de bord de butée pour une partie centrale (26) du corps de soupape (12),
- lors de l'opération de basculement de la première à la deuxième position d'extrémité, le corps de soupape (12), lors d'une première phase, sort du siège d'étanchéité (24) de manière à ne plus garantir une étanchéité complète du fluide hydraulique, qui se produit lorsqu'une pression est exercée dans le premier évidement (18),
- le premier évidement (18) présente, sur sa face qui est tournée par le corps de soupape (12), une configuration cylindrique creuse,
- le corps de soupape (12) comporte, sur sa face qui est tournée vers le premier évidement (18), une zone axiale qui comporte une surface enveloppante présentant une configuration cylindrique, et **en ce que**, lors de l'opération de basculement de la première à la deuxième position d'extrémité il se forme, entre le premier évidement (18) et la zone axiale, un espace annulaire qui libère la section transversale d'écoulement pour le fluide hydraulique,
- la section transversale d'écoulement maximale est atteinte dès qu'une arête d'entrée (34) disposée sur la face du corps de soupape (12) qui est tournée vers le premier évidement (18) dans la direction du premier évidement (18) sort de la zone axiale du premier évidement (18).

2. Soupape hydraulique selon la revendication 1, **caractérisée en ce que** l'espace annulaire est formé entre le diamètre de l'arête d'entrée (34) et le diamètre cylindrique creux du premier évidement (18).

3. Soupape hydraulique selon la revendication 1 ou 2, **caractérisée en ce que** la partie centrale (26) du corps de soupape est respectivement munie, dans sa zone de bord axiale d'une phase (28) qui se termine par une contre-dépouille (30) d'une partie de recouvrement (32), et **en ce que** l'intervalle de temps fixé est déterminé à partir de la distance entre la partie de recouvrement (32) et l'arête d'entrée (34).

4. Soupape hydraulique selon l'une quelconque des revendications précédentes, **caractérisée en ce que** le corps de soupape (12), sur son côté qui est tourné vers le premier évidement (18), est adapté par sa configuration extérieure à la configuration du premier évidement, et **en ce que**, lors d'un mouvement du corps de soupape (12) de la première à la deuxième position d'extrémité, la section transversale d'écoulement est constante au cours dudit intervalle de temps fixé.

5. Soupape hydraulique selon la revendication 4, **caractérisée en ce que** l'entraînement de la soupape hydraulique amène en continu le corps de soupape (12) de la première à la deuxième position d'extrémité.

6. Soupape hydraulique selon l'une quelconque des revendications précédentes, **caractérisée en ce qu'**un diaphragme réglable est disposé dans le trajet d'écoulement du fluide hydraulique dans la zone du premier évidement (18).
